# EUROPEAN PATENT APPLICATION

(11) **EP 1 096 444 A2**
(43) Date of publication of application: **02.05.2001**
(21) Application number: 00203750.5
(22) Date of filing: 27.10.2000
(51) Int. Cl.: G07F 19/00, H04L 29/06

(54) **Method and system for configuration of self-service financial transaction terminals for a common software release**

(30) Priority: 01.11.1999 US 162672 P
(71) Applicant: Citicorp Development Center, Inc., Los Angeles, California 90066 (US)
(72) Inventor: Gryte, Stephen M., Los Angeles, California 90066 (US)
(74) Representative: Hynell, Magnus

(57) **Abstract**

The present invention provides a platform-independent configuration framework that enables distribution of a common software component to a plurality of self-service financial transaction (SSFT) terminals. In an embodiment, the present invention enables three ways for configuring the SSFT terminal, namely, manual configuration during initial installation of a common software component using a PC keyboard coupled directly to the SSFT terminal, manual configuration using a local operator interface, and automated configuration over a communications network coupled with a network management system. The network management system may be coupled to a host computer terminal that monitors and manages SSFT terminal configuration, SSFT terminal operation, reporting status, and the installation of a common software component. Further, the configuration framework is executed using configuration scripts, executables, and associated files that are locally or remotely downloaded to the SSFT terminal.

In an embodiment, each SSFT terminal is configured using: (1) the name of the SSFT terminal; (2) an address for communicating on a network, such as an IP address; (3) physical location information, such as, location address, time zone, and phone number; (4) an address for network management, such as a network node identifier; (5) various hardware drivers; and (6) additional hardware identifiers, such as, manufacturer, family, product, card reader, and encryption device information. In another embodiment, each SSFT terminal is further configured using external service provider information including: (1) type of connection; (2) type of host; (3) type of gateway; (4) name, address for communicating on a network, port numbers of secondary nodes on the network; (5) financial center code; (6) business identification codes; (7) language support information; and (8) currency types supported by SSFT terminal.

## Description

### PRIORITY APPLICATION

This application claims priority to co-pending US Provisional Application Serial No. 60/162,672 filed November 1, 1999, entitled "Method And System For Configuration Of Self-Service Financial Terminals For A Common Software Release (Framework For Configuration Of Self-Service Financial Terminals)," and is incorporated herein by reference.

### CROSS REFERENCE TO RELATED APPLICATIONS

This application relates to Attorney Docket No. CITI0198/T0091-195417, filed simultaneously, entitled "Method And System For Secure Communication Between A Self-Service Financial Transaction Terminal And A Remote Operator Interface," and is incorporated herein by reference.

This application relates to Attorney Docket No. CITI0197/T0091-195418, filed simultaneously, entitled "Method And System For Obtaining Device Services On A Self-Service Financial Transaction Terminal," and is incorporated herein by reference.

This application relates to Attorney Docket No. CITI0200/T0091-195419, filed simultaneously, entitled "Method And System For Installing And/Or Upgrading Software On A Self-Service Financial Transaction Terminal From A Remote Computer," and is incorporated herein by reference.

This application relates to Attorney Docket No. CITI0202/T0091-195420, filed simultaneously, entitled "Method And System For Simultaneous And Unattended Installation Of Software On A Self-Service Financial Transaction Terminal," and is incorporated herein by reference.

This application relates to Attorney Docket No. CITI0199/T0091-195421, filed simultaneously, "Method And System For Remote Operator Interface With A Self-Service Financial Transaction Terminal," and is incorporated herein by reference.

This application relates to Attorney Docket No, CITI0201/T0091-195422, filed simultaneously, entitled "Method And System For Coordinating Session Activities At A Self-Service Financial Transaction Terminal," and is incorporated herein by reference.

This application relates to US Provisional Application No. 60/162,673, filed November 1, 1999, entitled "Method And System For Secure Communication Between A Self-Service Transaction Terminal And A Remote Operator Interface (Remote Operator Interface Security)," and is incorporated herein by reference.

This application relates to US Provisional Application No. 60/162,994, filed November 1, 1999, entitled "Method And System For Extensions For Financial Services Service Provider Framework For A Self-Service Transaction Terminal (XFS Service Provider Framework)," and is incorporated herein by reference.

This application relates to US Provisional Application No. 60/163,002, filed November 1, 1999, entitled "Method And System For Installing And/Or Upgrading Software On A Self-Service Financial Transaction Terminal From A Remote Computer (Remote Installation/Software Upgrade)," and is incorporated herein by reference.

This application relates to US Provisional Application No. 60/162,815, filed November 1, 1999, entitled "Method And System For Simultaneous And Unattended Installation Of Software On A Self-Service Financial Transaction Terminal (Global Installation Framework)" and is incorporated herein by reference.

This application relates to US Provisional Application No. 60/163,000, filed November 1,1999, entitled "Method And System Of Remote Operator Interface For A Self-Service Financial Terminal (Remote Operator Interface)," and is incorporated herein by reference.

This application relates to US Provisional Application Serial No. 60/162,816 filed November 1, 1999, entitled "Method And System For Coordinating Session Activities At A Self-Service Financial Transaction Terminal (ATM Session Manager)," and is incorporated herein by reference.

### COPYRIGHT NOTIFICATION

A portion of the disclosure of this patent document and its figures contain material that is subject to copyright protection. The copyright owner has no objection to the facsimile reproduction by anyone of the patent document or the patent disclosure, as it appears in the Patent and Trademark Office patent files or records, but otherwise reserves all copyrights whatsoever.

### BACKGROUND OF THE INVENTION

### 1. Field of the Invention

The present invention relates generally to the field of self-service financial transaction terminals, such as automatic teller machines or financial terminals, and more particularly, to a platform-independent method and system for configuration of a plurality of self-service financial transaction terminals for a common software component, such as software applications, releases, files, and upgrades.

### 2. Background

Self-service financial transaction (SSFT) terminals, such as automatic teller machines (ATMs), include computer applications or software running on computer hardware that enable the SSFT terminal to interface with a host computer and other remote computers over a communications network. A financial institution, such as a bank, may have a global ATM product, that includes software running on the bank terminals or ATMs. That product is designed to run in a global environment throughout the world and across many different hardware and software vendors. In such a situation, the financial institution also wants to have one common release of the software for this product. However, in order to have a common software release for each particular SSFT terminal on which the product is loaded, each SSFT terminal must be configured with unique information.

Typically, what is done to configure the SSFT terminal is to identify a number of factors, such as, for example, SSFT terminal parameters, external service provider parameters, network parameters, and business parameters. These parameters are then used to manually configure the SSFT terminal. Further, the financial institution usually has hundreds, possibly thousands, of different software components to manually configure for installation on a SSFT terminal before deployment. Accordingly, current industry practice is tedious, prone to a high number of errors, and requires a large amount of manpower to accomplish. Thus, a need exists for a global configuration method and system to solve the above problems in a fast, reliable, and efficient manner. A need also exists for a platform-independent configuration method and system that are able to: (1) provide for simultaneous and unattended configuration for a plurality of SSFT terminals; (2) accommodate additional SSFT terminals as the system expands; (3) operate on many different computer platforms and operating systems; and (4) operate with many different software applications.

### SUMMARY OF THE INVENTION

To overcome the aforementioned problems and to provide other benefits, the present invention makes use of configuration information, such as, for example, terminal parameters, external service provider parameters, network parameters, and business parameters. The configuration information for a particular terminal is stored in a number of locations in a local registry, such as, for example, a local NT registry, and is retrieved by various system components that require configuration information. An embodiment of the present invention provides, for example, three ways of configuring SSFT terminals. First, a manual configuration method and system uses a personal computer (PC) keyboard coupled to the SSFT terminal to access and configure the SSFT terminal during initial installation. A second configuration method and system provides manual configuration through a local operator interface displayed on an interactive interface of the SSFT terminal (e.g., the front screen of an ATM). A third configuration method and system provides automated configuration of the SSFT terminal by a network management system running on the communications network. The second and third configuration methods and systems are useful after the initial installation of software components when subsequent components are updated and added to the SSFT terminal and provide back-up configurations parameters.

Further details on these embodiments and other possible embodiments of the present invention are set forth below. As is appreciated by those of ordinary skill in the art, the method and system of the present invention have wide utility in a number of areas as illustrated by the wide variety of features and advantages discussed below.

It is a feature and advantage of the present invention to provide a method and system for configuration of a plurality of SSFT terminals, such as ATMs, that enable distribution and configuration for a common software component including software applications, releases, files, and upgrades.

It is another feature and advantage of the present invention to provide a method and system for manual configuration of an SSFT terminal during local installations using a communications device, such as a keyboard, coupled with the SSFT terminal.

It is another feature and advantage of the present invention to provide a method and system for manual configuration of an SSFT terminal through a local operator interface at the SSFT terminal.

It is another feature and advantage of the present invention to provide a method and system for automated configuration of an SSFT terminal during remote installations over a communications network coupled with the SSFT terminal.

It is another feature and advantage of the present invention to provide a network management system over a communications network that monitors, identifies, coordinates, and manages SSFT terminal configuration.

It is another feature and advantage of the present invention to provide a network management system over a communications network that is responsible for monitoring SSFT terminal operation, reporting status, and downloading of software components during SSFT configuration.

It is another feature and advantage of the present invention to provide a network management system over a communications network that maintains a database of all configuration information for each SSFT terminal coupled with the communications network.

It is another feature and advantage of the present invention to makes use of site configuration information in a local registry, such as a NT registry, to store configuration parameters.

It is another feature and advantage of the present invention to make use of tokens that can automatically substitute configuration parameters, such as system files and other related information

It is another feature and advantage of the present invention to provide a flexible configuration system that is capable of accommodating changes in the system architecture.

It is another feature and advantage of the present invention to provide a platform-independent method and system that is capable of running on many different hardware platforms, operating systems, programming languages, software applications, and with other computer technology.

It is another feature and advantage of the present invention to have a standardized interactive interface display for each type of SSFT terminal regardless of the computer system (i.e., the hardware platforms, operating systems, programming languages, software applications, and other computer technology).

It is another feature and advantage of the present invention for an SSFT terminal to interface and communicate with a communications network through a variety of electronic mediums, including wireline and wireless technology, such as, for example, WAN, LAN, PSTN, satellite systems, other public and private communications networks, and the like.

It is another feature and advantage of the present invention to use SSFT terminals with different manufacturers and design specifications to access and communicate with the configuration framework.

It is another feature and advantage of the present invention to use diverse electronic communication devices, such as PCs, Macintosh, pen-based computers, interactive telephones, interactive television, interactive pagers, and the like to access and communicate with the configuration framework.

It is another feature and advantage of the present invention to store, maintain, and manage configuration data to a communications network server.

It is another feature and advantage of the present invention to provide encryption parameters for configuration of a plurality of SSFT terminals by a communications network.

It is another feature and advantage of the present invention to provide labor savings by automatically coordinating configuration parameters for a plurality of SSFT terminals.

It is another feature and advantage of the present invention to provide labor savings by providing a framework for unattended and simultaneous configuration for a plurality of SSFT terminals.

It is another feature and advantage of the present invention to significantly reduce the time required by the overall process to identify and manage configuration activities.

It is another feature and advantage of the present invention to allow a user to select a language (e.g., English, French, Spanish, German, etc.) to display configuration information.

It is another feature and advantage of the present invention to provide a configuration method and system for a financial institution's communications network.

It is another feature and advantage of the present invention to provide a configuration method and system for a financial institution's ATM network.

These features and advantages may be accomplished singularly, or in combination, in one or more of the embodiments of the present invention.

Additional features, advantages, objects, and uses of this invention are set forth in the detailed description that follows and will become more apparent to those skilled in the art upon examination of the following or by practice of the invention.

### BRIEF DESCRIPTION OF THE FIGURES

Other features, advantages, objects, and uses of the present invention are more clearly understood by reference to the following description taken in connection with the accompanying figures, in which:
FIG. 1 is a representation of an overview of the communication devices used to interface with and configure the SSFT terminal in an embodiment of the present invention.
FIG. 2 is an exemplary configuration interactive interface display used to communicate configuration parameters and to manually configure an SSFT terminal using the local operator interface in an embodiment of the present invention.
FIG. 3 is an exemplary configuration interactive interface display that summarizes configuration parameter values using the local operator interface in an embodiment of the present invention.
FIG. 4 is an exemplary configuration interactive interface display used to communicate configuration parameters and to automatically configure an SSFT terminal over a communications network in an embodiment of the present invention.

### DETAILED DESCRIPTION

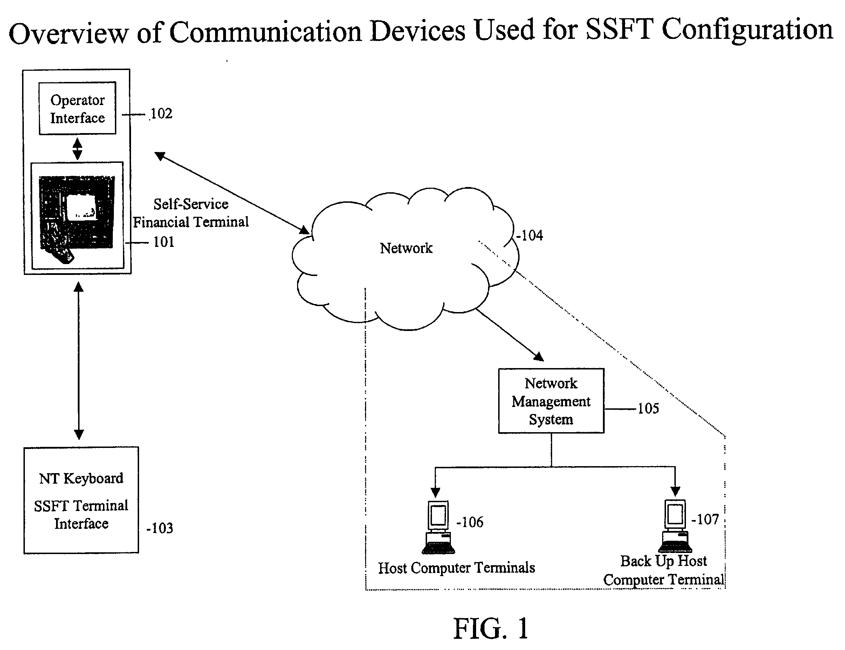

Referring now in detail to Figure 1, the method and system for an embodiment of the present invention provides a configuration framework that enables distribution of a common software component (e.g., software applications, files, releases, and upgrades) to a plurality of SSFT terminals 101. In an embodiment, the present invention enables three ways for configuring the SSFT terminal 101, namely, manual configuration during initial installation of a common software component using a PC keyboard 103 coupled directly to the SSFT terminal 101, manual configuration using a local operator interface 102, and automated configuration over a communications network 104 coupled with a network management system 105. The network management system 105 may be coupled to a host computer terminal 106 and to a back-up host computer terminal 107 that monitor and manage SSFT terminal configuration, SSFT terminal operation, reporting status, and the installation of a common software component. Further, the configuration framework is executed using configuration scripts, executables, and associated files that are locally or remotely downloaded to the SSFT terminal 101.

In order to install a software component, such as, a Windows NT product, each SSFT terminal 101 must be identified and configured differently. For example, in an embodiment of the present invention, each SSFT terminal 101 is uniquely identified by: (1) the name of the computer; (2) an address for communicating on a network, such as an IP address; (3) physical location information, such as, location address, time zone, and phone number; (4) an address for network management, such as a network node identifier; (5) various hardware drivers, such as, a display driver, a network adapter driver, and a sound driver; and (6) additional hardware identifiers, such as, manufacturer, family, product, card reader, and encryption device information. When the terminal is communicating with a host terminal 106 over the communications network 104, there is unique external service provider information that is also needed to configure each SSFT terminal. For example, external service provider information may include: (1) type of connection, such as TCP/IP or X25; (2) type of host; (3) type of gateway; (4) name, address for communicating on a network, and port numbers of the host computer terminal; (5) financial center code; (6) business identification codes; (7) language support information; and (8) currency types supported by the SSFT terminal.

External service provider configuration information includes business related matters, such as, which financial center is associated with the particular financial terminal and which languages need to be supported on that terminal. In different countries there are different language requirements in dealing with a global product. For example, when a global product is run in Belgium, depending on what part of Belgium the terminal is deployed, the terminal has two languages on the screen. Whether it is French or Flemish depends on what area of the country it is in. This is another example of a terminal dependent configuration, as well as the types of currencies and denominations that are put in the terminal.

Thus, it is apparent that there are numerous types of information that are needed for each SSFT terminal 101 that cannot be included in a worldwide release of a common software component. In an embodiment, configuration parameters are stored in the SSFT terminal 101 in a number of places. For example, there are three basic ways in which the information is stored. An embodiment of the present invention makes use of the facilities of an operating system, such as the facilities of Windows NT operating system, which serves as the base for all SSFT terminals 101. Configuration parameters are stored, for example, in an NT environment variable, which is a system wide way of storing information.

Another embodiment makes use, for example, of a site configuration area in a local registry, such as a NT registry, where much of the configuration parameters are stored basically as values, such as names and information. Another embodiment makes use of tokens, which involve the same type of idea of a variable with a predefined value. However, tokens are special because in the course of configuring the SSFT terminal, they automatically substitute configuration parameters, such as system files and other related information. Thus, when the SSFT terminal reboots, the tokens have the correct parameter value, as opposed to requiring the system to request the parameter value from the local registry.

In an embodiment of the present invention, manual configuration is done at the SSFT terminal site during the initial installation of all the software components to ensure the SSFT terminal 101 is operational. The SSFT terminal 101 is configured after the operating system is installed on the SSFT terminal. The configuration software is stored on a compact disk (CD) that initiates one or more configuration scripts. An operator enters a configuration interactive interface display that shows default configuration parameter values and prompts for any changes or new configuration parameter values. Any required configuration information is manually entered into the disk operating system (DOS) using a PC keyboard 103 coupled to the SSFT terminal 101. In a further embodiment, after the configuration is entered, it is stored in a local registry, such as an NT registry, or to a floppy disk. The operator can change the configuration parameter values manually before committing the information to the local registry or to the floppy disk so that configuration information does not have to be re-keyed at a later time. At the conclusion of the configuration stage when the SSFT terminal 101 is rebooted. Once rebooted, the SSFT terminal 101 initializes and automatically invokes reconfiguration scripts for all of the different software components selected to install. Thereafter, the software components are ready for installation.

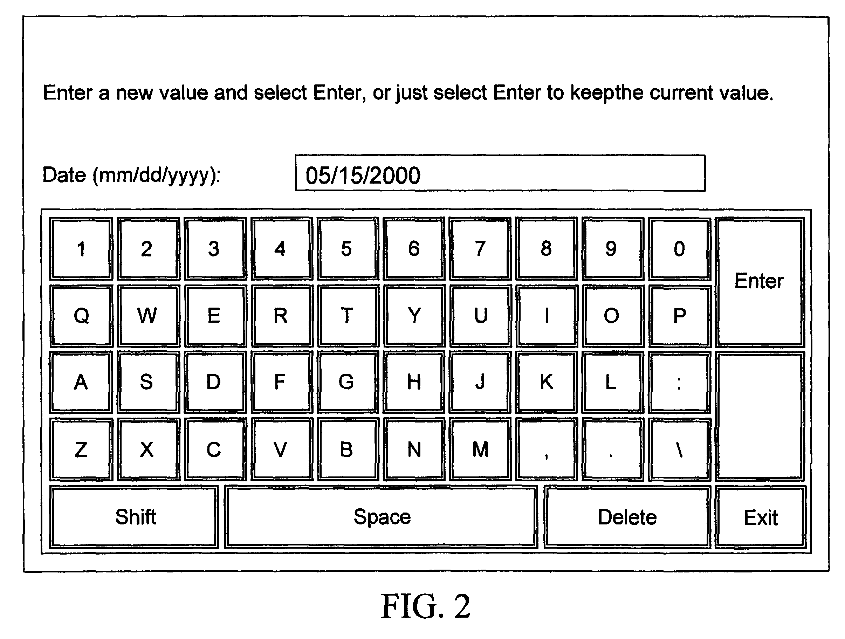

In another embodiment, the SSFT terminal 101 can be configured subsequent to the initial installation of one or more software components using a local operator interface 102. Instead of going into a manual configuration stage of prompting for various configuration parameter values, a default set of configuration parameter values is automatically populated and displayed on the local operator interface 102 (such as, the front screen of an ATM). The local operator interface 102 is a user-friendly interactive interface display, such as a graphical user interface of an ATM that uses a touch screen or functioning keys. Figure 2 represents an example of the interactive interface display used at the local operator interface to view, enter, accept, and/or modify configuration parameter values. The exemplary configuration parameter value depicted in Figure 2 shows the DATE configuration parameter.

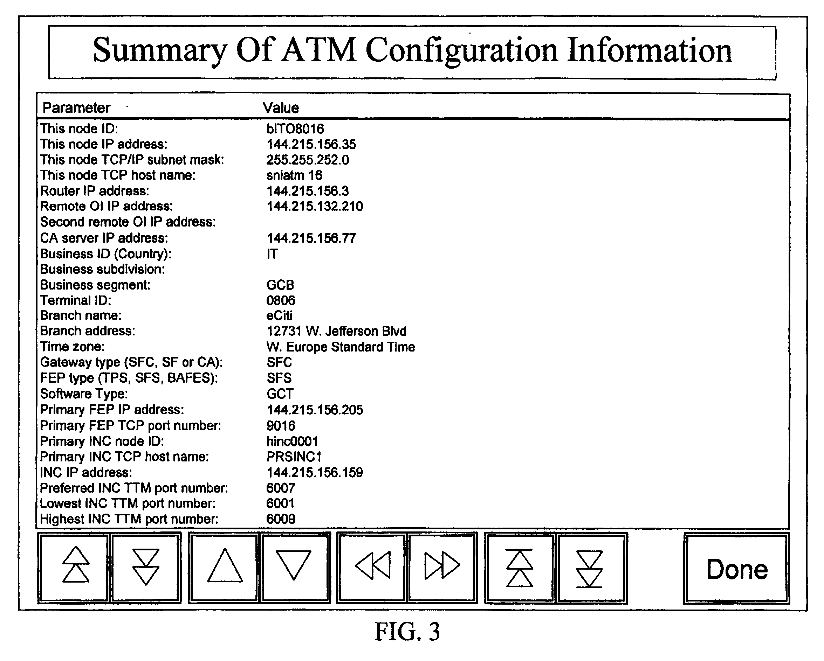

Using the interactive interface display, all of the configuration parameter values can be accessed, reviewed, and changed to override existing configuration parameter values. Figure 3 represents an example of the local operator interface with a summary of all the configuration parameter values with forward and backward controls below the interactive interface display. After configuration parameter values are updated, reconfiguration scripts are invoked for all software components on the SSFT terminal 101 and the SSFT terminal 101 is automatically rebooted.

In another embodiment, when an operator selects a configuration parameter value using the local operator interface 102, the interactive interface display may prompt a small number of configuration parameter values. These configuration parameter values provide just enough information so that the SSFT terminal 101 can communicate with the network management system 105 on the network 104. The network management system 105 monitors and manages all of the SSFT terminals 101 on the network. Typically, each bank (i.e., business) has one or more SSFT terminals 101 that are located on-premises (i.e., the same site as the bank) or off-premises (i.e., a remote site from the bank). The network management system 105 maintains all of the configuration parameters for all of the SSFT terminals 101, and the network management system 105 also maintains all of the software components that are installed on the SSFT terminals. Thus, the network management system 105 acts as the central point for monitoring, distributing, and managing configuration parameter values and the configuration framework associated with the installation of a common software component.

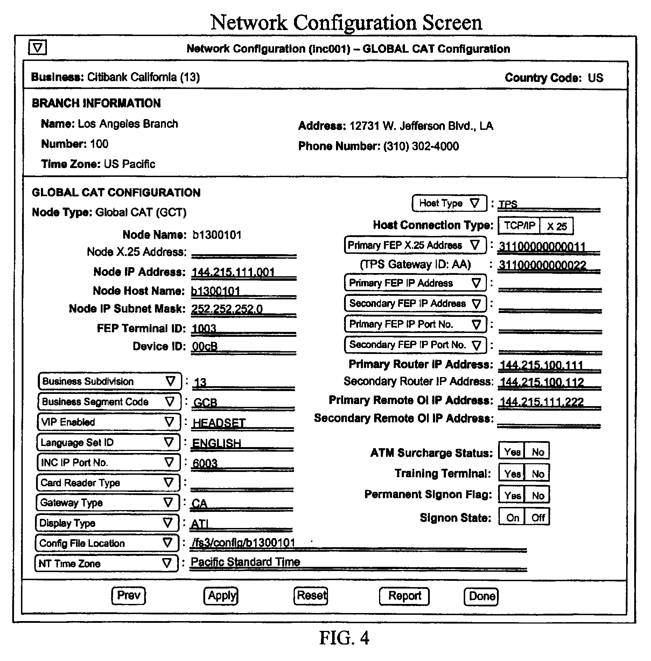

In another embodiment, the network management system 105 controls automated configuration of all of the SSFT terminals 101 coupled to the network 104. Typically, an administrator or an operator initiates the automated configuration commands from a host computer terminal 106. The SSFT terminal 101 is rebooted and a message goes out to the network management system 105 indicating that a SSFT terminal 101 is operational and ready for configuration. Typically, there are enough default configuration parameter values on the SSFT terminal 101 that allow the SSFT terminal 101 to establish communication with the network management system 105. These default values often include: (1) the name of the computer; (2) the node identifier of the SSFT terminal; (3) the IP address of the SSFT terminal; (4) the IP address of the network management system; (5) the IP address of the subnet gateway; and (6) several other necessary communication configuration parameter values. After rebooting, the SSFT terminal 101 identifies itself to the network management system 105 using the SSFT terminal node identifier. The network management system 105 then initiates an automated procedure to download all of the remaining configuration parameter values. Scripts reside on the SSFT terminal 101 are invoked to configure the SSFT terminal 101 using the up-to-date configuration parameter values from the network management system 105. An example of the configuration interactive interface display used with the automated configuration method and system is depicted in Figure 4.

In another embodiment, configuration parameters are entered manually at the network management system 105 for all of the SSFT terminals 101 with SSFT terminal node identifiers. Further, the network management system 105 communicates all of the configuration parameter values to a database coupled with the network 105. Thus, when a SSFT terminal 101 requests its associated configuration parameter values, the network management system accesses the configuration parameter values and uses this information to automatically configure the SSFT terminal 101. In another embodiment, the network management system 105 communicates the SSFT terminal configuration parameter values to the local operator interface 102 where an operator can review and modify configuration parameter values. The operator is given a final indication that the SSFT terminal 101 is ready for configuration, and the operator then initiates the configuration. At this point, the configuration information is written into the local registry. After the configuration information is commitment to the local registry, the operator interface 102 reboots the SSFT terminal 101 which initiates a reconfiguration call for all of the scripts or all of the different software components. When the reconfiguration scripts are invoked, the SSFT terminal 101 is reconfigured with the new values.

In another embodiment, when a software component is selected for remote installation over the network 105, the SSFT terminal 101 is associated with configuration parameter values for that software component and is automatically configured prior to the installation of the software component. Thus, remote installation and configuration does not use the local operator interface 102 or the PC keyboard 103 which is utilized only when the CD is used for installation. Further, either a private or public network can be used, if it is assured that the information is secure, for example, with encryption on various sensitive parts of the protocol. Generally, the connection from the SSFT terminal 101 to the network 104 is TCP/IP or X25. When the SSFT terminal 101 is actually performing customer transactions (i.e., there is an active customer session), the SSFT terminal 101 accesses the appropriate network in the particular country where the SSFT terminal 101 is deployed, so long as it is secure or so long as there is a secure protocol.

In another embodiment, the SSFT terminal 101 is configured using global configuration parameters and business-specific configuration parameters. For example, the United States requires that SSFT terminals 101 provide services to handicapped customers, such as visually impaired persons. Accordingly, when an SSFT terminal 101 is configured for deployment in the United States, presentation parameters (e.g., audio presenters, specially modified visual displays, and the like) for visually impaired persons are configured.

In another embodiment, if the configuration of the SSFT terminal 101 fails, there is a fail-safe procedure for uninstalling the failed configuration parameter values and for automatically executing a configuration profile associated with previously running configuration parameter values.

An embodiment of the present invention enables use of the same configuration procedure for all SSFT terminal manufacturers and for different electronic communication devices used as an SSFT terminal. For example, ATMs that are manufactured by different vendors that include different hardware can be configured using the present invention. Further, diverse electronic communication devices, such as PCs, Macintosh, pen-based computers, interactive telephones, interactive television, interactive pagers, and the like may also be used as SSFT terminals to access and communicate with the configuration framework.

The foregoing description and associated figures detail only illustrative examples of the environment in which the invention can be used and are not intended to be limiting. For instance, the operating system for the present invention is preferably Microsoft's Windows NT but may alternatively operate on other operating systems, such as a Macintosh, UNIX, or LINUX operating systems. Further, the programming languages, software platforms, operating systems, hardware components, communications protocols, and other technology mentioned in the foregoing description are by way of example only, and the present invention may always be enhanced to incorporate the most advanced available technology. Numerous modifications and adaptations thereof will be readily apparent to one skilled in the art, and the above disclosure is intended to cover all such modifications and equivalents.

## Claims

1. A platform-independent configuration method for a self-service financial transaction terminal in at least one communications network, comprising:
accessing said self-service financial transaction terminal;
identifying self-service financial transaction terminal parameters, wherein said self-service financial transaction terminal parameters comprise one or more of the following:
profile parameters,
hardware parameters,
external service parameters,
network parameters,
delivery system parameters, and
business parameters;
selecting a software component to install on said self-service financial transaction terminal; and
selectively configuring said self-service financial transaction terminal using said self-service financial transaction terminal parameters and parameters associated with said software component.

2. The method of claim 1, wherein said configuration is transparent to a user using said self-service financial transaction terminal.

3. The method of claim 1, wherein said self-service financial transaction terminal parameters further comprise presentation parameters.

4. The method of claim 3, wherein said presentation parameters enable communications with visually impaired persons.

5. The method of claim 1, wherein said profile parameters comprise one or more of the following:
a self-service financial transaction terminal identifier;
a network identifier associated with said self-service financial transaction terminal;
a network communications protocol;
a network management protocol;
a location address;
a location time zone; and
a location phone number.

6. The method of claim 5, wherein said profile parameters further comprise one or more of the following:
a card reader; and
an encryption device.

7. The method of claim 6, wherein said profile parameters further comprise manufacturing parameters associated with said self-service financial transaction terminal.

8. The method of claim 7, wherein said profile parameters further comprise one or more of the following:
a network adapter driver;
a display driver;
a sound driver; and
a unique security identifier associated with said self-service financial transaction terminal.

9. The method of claim 1, wherein said external service provider parameters further comprise one or more of the following:
type of communications connection;
type of host; and
type of gateway.

10. The method of claim 9, wherein said external service provider parameters further comprise one or more of the following:
a network management system identifier;
a network management system communications protocol;
port numbers for said network management system identifier; and
a unique security identifier associate with a network management system.

11. The method of claim 10, wherein said external service provider parameters further comprise one or more of the following:
a business identifier;
a business communications protocol;
a unique security identifier associate with a business; and
port numbers for said business identifier.

12. The method of claim 11, wherein said external service provider parameters further comprise one or more of the following:
business identification codes;
a financial center identifier;
language support codes; and
currency types.

13. The method of claim 1, further comprising:
executing configuration scripts to control configuration of said self-service financial transaction terminals.

14. The method of claim 13, wherein said configuration scripts control unattended and simultaneous configuration of one or more of said self-service financial transaction terminals.

15. The method of claim 1, further comprising:
automatically controlling reboots of said self-service financial transaction terminal associated with said configuration.

16. The method of claim 1, further comprising:
selectively updating said self-service financial transaction terminal parameters associated with said configuration to a local registry; and
selectively managing said self-service financial transaction terminal parameters associated with said configuration in said local registry.

17. The method of claim 1, further comprising:
selectively updating said self-service financial transaction terminal parameters associated with said configuration to said communications network.

18. The method of claim 1, further comprising:
using said self-service financial terminal parameters and said parameters associated with one or more of said software components for said configuration.

19. The method of claim 1, further comprising:
if said configuration fails, automatically uninstalling said self-service financial terminal parameters and said parameters associated with one or more of said software components and executing a previously running configuration profile.

20. The method of claim 1, wherein said configuration is performed at the same site as said self-service financial transaction terminal.

21. The method of claim 1, wherein said configuration is remotely performed at a remote site from the physical location of said self-service financial transaction terminal.

22. The method of claim 1, wherein said configuration is initiated during initial installation of said software component.

23. The method of claim 1, wherein said configuration is initiated during a subsequent installation of a second software component.

24. The method of claim 1, wherein said self-service financial transaction terminal comprises an ATM terminal.

25. The method of claim 1, wherein said self-service financial transaction terminal comprises an home banking terminal.

26. The method of claim 1, wherein said self-service financial transaction terminal comprises a staff terminal used within a financial institution.

27. The method of claim 1, wherein said self-service financial transaction terminal comprises an electronics communications device.

28. The method of claim 27, wherein said electronics communications device comprises one of the following:
a personal computer;
a screen telephone;
a personal data assistant; and
an interactive television.

29. The method of claim 1, wherein said self-service financial transaction terminal is coupled with a global communications network having a plurality of nodes interconnected with communication lines.

30. The method of claim 29, wherein said configuration is automatically initiated and managed by a network management system of said global communications network.

31. The method of claim 29, further comprising:
selectively updating global communications network parameters associated with said configuration; and
selectively managing said global communications network parameters associated with said configuration.

32. The method of claim 29, wherein said self-service financial transaction terminal communicates with said global communications network over a public switch telephone network.

33. The method of claim 29, wherein said self-service financial transaction terminal communicates with said global communications network over a mobile radiotelephone network.

34. The method of claim 29, wherein said self-service financial transaction terminal communicates with said global communications network over a cellular network.

35. The method of claim 29, wherein said self-service financial transaction terminal communicates with said global communications network over a cable network.

36. The method of claim 29, wherein said self-service financial transaction terminal communicates with said global communications network over one of an internet, intranet, or extranet.

37. The method of claim 29, wherein said global communications network is a financial institution's communications network.

38. The method of claim 29, further comprising a security component for adding security identifiers to communications sent to said self-service financial transaction terminal and for verifying security identifiers on communications received from said self-service financial transaction terminal.

39. A platform-independent configuration system for a self-service financial transaction terminal in at least one communications network, comprising:
means for accessing said self-service financial transaction terminal;
means for identifying self-service financial transaction terminal parameters, wherein said self-service financial transaction terminal parameters comprise one or more of the following:
profile parameters,
hardware parameters,
external service parameters,
network parameters,
delivery system parameters, and
business parameters;
means for selecting a software component to install on said self-service financial transaction terminal; and
means for selectively configuring said self-service financial transaction terminal using said self-service financial transaction terminal parameters and parameters associated with said software component.

40. The system of claim 39, wherein said configuration is transparent to a user using said self-service financial transaction terminal.

41. The system of claim 39, wherein said self-service financial transaction terminal parameters further comprise presentation parameters.

42. The system of claim 41, wherein said presentation parameters enable communications with visually impaired persons.

43. The system of claim 39, wherein said profile parameters comprise one or more of the following:
a self-service financial transaction terminal identifier;
a network identifier associated with said self-service financial transaction terminal;
a network communications protocol;
a network management protocol;
a location address;
a location time zone; and
a location phone number.

44. The system of claim 43, wherein said profile parameters further comprise one or more of the following:
a card reader; and
an encryption device.

45. The system of claim 44, wherein said profile parameters further comprise manufacturing parameters associated with said self-service financial transaction terminal.

46. The system of claim 45, wherein said profile parameters further comprise one or more of the following:
a network adapter driver;
a display driver;
a sound driver; and
a unique security identifier associated with said self-service financial transaction terminal.

47. The system of claim 39, wherein said external service provider parameters further comprise one or more of the following:
type of communications connection;
type of host; and
type of gateway.

48. The system of claim 47, wherein said external service provider parameters further comprise one or more of the following:
a network management system identifier;
a network management system communications protocol;
port numbers for said network management system identifier; and
a unique security identifier associate with a network management system.

49. The system of claim 48, wherein said external service provider parameters further comprise one or more of the following:
a business identifier;
a business communications protocol;
a unique security identifier associate with a business; and
port numbers for said business identifier.

50. The system of claim 49, wherein said external service provider parameters further comprise one or more of the following:
business identification codes;
a financial center identifier;
language support codes; and
currency types.

51. The system of claim 39, further comprising:
means for executing configuration scripts to control configuration of said self-service financial transaction terminals.

52. The system of claim 51, wherein said configuration scripts control unattended and simultaneous configuration of one or more of said self-service financial transaction terminals.

53. The system of claim 39, further comprising:
means for automatically controlling reboots of said self-service financial transaction terminal associated with said configuration.

54. The system of claim 39, further comprising:
means for selectively updating said self-service financial transaction terminal parameters associated with said configuration to a local registry; and
means for selectively managing said self-service financial transaction terminal parameters associated with said configuration in said local registry.

55. The system of claim 39, further comprising:
means for selectively updating said self-service financial transaction terminal parameters associated with said configuration to said communications network.

56. The system of claim 39, further comprising:
means for using said self-service financial terminal parameters and said parameters associated with one or more of said software components for said configuration.

57. The system of claim 39, further comprising:
if said configuration fails, means for automatically uninstalling said self-service financial terminal parameters and said parameters associated with one or more of said software components and executing a previously running configuration profile.

58. The system of claim 39, wherein said configuration is performed at the same site as said self-service financial transaction terminal.

59. The system of claim 39, wherein said configuration is remotely performed at a remote site from the physical location of said self-service financial transaction terminal.

60. The system of claim 39, wherein said configuration is initiated during initial installation of said software component.

61. The system of claim 39, wherein said configuration is initiated during a subsequent installation of a second software component.

62. The system of claim 39, wherein said self-service financial transaction terminal comprises an ATM terminal.

63. The system of claim 39, wherein said self-service financial transaction terminal comprises an home banking terminal.

64. The system of claim 39, wherein said self-service financial transaction terminal comprises a staff terminal used within a financial institution.

65. The system of claim 39, wherein said self-service financial transaction terminal comprises an electronics communications device.

66. The system of claim 65, wherein said electronics communications device comprises one of the following:
a personal computer;
a screen telephone;
a personal data assistant; and
an interactive television.

67. The system of claim 39, wherein said self-service financial transaction terminal is coupled with a global communications network having a plurality of nodes interconnected with communication lines.

68. The system of claim 67, wherein said configuration is automatically initiated and managed by a network management system of said global communications network.

69. The system of claim 67, further comprising:
means for selectively updating global communications network parameters associated with said configuration; and
means for selectively managing said global communications network parameters associated with said configuration.

70. The system of claim 67, wherein said self-service financial transaction terminal communicates with said global communications network over a public switch telephone network.

71. The system of claim 67, wherein said self-service financial transaction terminal communicates with said global communications network over a mobile radiotelephone network.

72. The system of claim 67, wherein said self-service financial transaction terminal communicates with said global communications network over a cellular network.

73. The system of claim 67, wherein said self-service financial transaction terminal communicates with said global communications network over a cable network.

74. The system of claim 67, wherein said self-service financial transaction terminal communicates with said global communications network over one of an internet, intranet, or extranet.

75. The system of claim 67, wherein said global communications network is a financial institution's communications network.

76. The system of claim 67, further comprising a security component for adding security identifiers to communications sent to said self-service financial transaction terminal and for verifying security identifiers on communications received from said self-service financial transaction terminal.
